# EUROPÄISCHE PATENTSCHRIFT

(11) **EP 3 243 073 B1**
(45) Veröffentlichungstag und Bekanntmachung des Hinweises auf die Patenterteilung: **13.03.2019**
(21) Anmeldenummer: 16825323.5
(22) Anmeldetag: 25.11.2016
(51) Int. Cl.: G01N 30/86, G01N 30/88, G01N 30/46

(54) **VERFAHREN ZUR STEUERUNG KONTINUIERLICHER CHROMATOGRAPHIE UND MULTISÄULEN-CHROMATOGRAPHIE-ANORDNUNG**
METHOD FOR CONTROLLING CONTINUOUS CHROMATOGRAPHY AND MULTI-COLUMN CHROMATOGRAPHY ASSEMBLY
PROCEDE DE COMMANDE DE CHROMATOGRAPHIE EN CONTINU ET AGENCEMENT DE CHROMATOGRAPHIE MULTICOLONNE

(30) Priorität: 26.11.2015 EP 15196599
(43) Veröffentlichungstag der Anmeldung: 15.11.2017
(73) Patentinhaber: Karlsruher Institut für Technologie, 76131 Karlsruhe (DE)
(72) Erfinder: HUBBUCH, Jürgen, 76327 Pfinztal (DE); BRESTRICH, Nina, 4057 Basel (CH); RÜDT, Matthias, 76137 Karlsruhe (DE); ROLINGER, Laura, 66706 Perl (DE)
(74) Vertreter: Müller-Boré & Partner Patentanwälte PartG mbB
(86) Internationale Anmeldenummer: PCT/EP2016/001995
(87) Internationale Veröffentlichungsnummer: WO 2017/088979

(56) Entgegenhaltungen:
- WO-A1-00/45929
- WO-A1-2004/106915
- DE-A1-102010 047 427
- US-A1- 2014 251 913
- BORTOLATO SANTIAGO A ET AL: "Chemometric processing of second-order liquid chromatographic data with UV-vis and fluorescence detection. A comparison of multivariate curve resolution and parallel factor analys", ANALYTICA CHIMICA ACTA, ELSEVIER, AMSTERDAM, NL, Bd. 842, 14. Juli 2014 (2014-07-14), Seiten 11-19, XP029045047, ISSN: 0003-2670, DOI: 10.1016/J.ACA.2014.07.007
- GARCIA-MARTIN S ET AL: "Solid-phase microextraction gas chromatography-mass spectrometry (HS-SPME-GC-MS) determination of volatile compounds in orujo spirits: Multivariate chemometric characterisation", FOOD CHEMISTRY, ELSEVIER LTD, NL, Bd. 118, Nr. 2, 15. Januar 2010 (2010-01-15), Seiten 456-461, XP026497695, ISSN: 0308-8146, DOI: 10.1016/J.FOODCHEM.2009.04.105 [gefunden am 2009-05-03]

## Beschreibung

Der Gegenstand der vorliegenden Erfindung betrifft ein Verfahren zur Steuerung kontinuierlicher Chromatographie durch Auswertung multivariater Signale mit mathematischen Methoden. Das Verfahren ist im Bereich der Aufreinigung von Biopharmazeutika anwendbar. Die Aufreinigung von Biopharmazeutika wird größtenteils mittels chromatographischer Trennverfahren durchgeführt, da sie hohe Produktreinheiten bei gleichzeitig hohen Ausbeuten erlauben. Gegenwärtig findet in der Biopharmaindustrie ein Wandel von batch-basierten zu kontinuierlichen Prozessen statt.
Eine Herausforderung stellt dabei dar, dass biopharmazeutische Prozess im Vergleich zu chemischen Verfahren einer hohen Variabilität unterliegen. Um bei einem kontinuierlichen biopharmazeutischen Prozess den stationären Zustand aufrecht zu erhalten, ist daher eine effiziente Prozesskontrolle zentral.
Gegenwärtig beschränkt sich die Online-Prozessüberwachung bei chromatographischen Verfahren auf univariate Prozessparameter, wie pH-Wert, Leitfähigkeit oder Absorption des Effluents. Erst in Offline-Analysen werden zentrale Prozessparameter, beispielsweise Zielproteingehalt, Konzentration an koeluierenden Kontaminaten, etc. bestimmt. Für die Kontrolle eines kontinuierlichen chromatographischen Verfahrens werden diese Prozessparameter jedoch in Echtzeit benötigt.
WO 2014/154331 A1 offenbart ein Verfahren zur infrarotspektoskopischen Massenbestimmung von Proteingemischen in Proben, welche Biomoleküle beinhalten. Die Quantifizierung benötigt weniger Zeit, keine zusätzlichen Puffer oder Eluenten und auch weniger Probenvolumen als herkömmliche bekannte Verfahren.
Jedoch ist es mit diesem Verfahren nicht möglich, während des chromatographischen Prozesses direkt bzw. online spektroskopische Messungen durchzuführen und das Verfahren ist zudem nur auf die Quantifizierung von Proteinaggregaten auf einem zusätzlichen Trägermaterial mittels Fourier-Transform-Infrarotspektrometie ausgerichtet.

WO 2010151214 A1 offenbart ein Verfahren zur Messung der Beladung sowie die Prozesskontrolle der Beladungsphasen in einer Ein- oder Mehrsäulen-Chromatographie-Anordnung. Hierzu wird ein Signal vor und nach der Säule aufgezeichnet und über die Differenz auf die beladene Masse an bindenden Spezies geschlossen.

Dieses Verfahren benötigt jedoch unbedingt zwei Detektoren, wobei sich einer vor und einer hinter der Säule befindet. Zudem ist die Detektion auf Differenzsignale und auf daraus berechnete Prozessparameter wie Saturierung der Säule, prozentualer Durchbruch des Produkts limitiert.

Ferner offenbart die Druckschrift WO 00/45929 A1 ein chromatographisches System zur Bestimmung physikochemischer Eigenschaften einer oder mehrerer Verbindungen.

Die Druckschrift von Santiago A. Bortolato et al. mit dem Titel "Chemometric processing of second-order liquid chromatographic data with UV-vis and fluorescence detection. A comparison of multivariate curve resolution and parallel factor analysis 2", aus Analytica Chimica Acta, Volume 842, 2014, Pages 11-19, ISSN 0003-2670, http://dx.doi.org/10.1016/j.aca.2014.07.007, offenbart ein Chromatographie-Verfahren, wobei gemessene Daten von einem chemomentrischen Verfahren verarbeitet werden.

Außerdem offenbart die Druckschrift von S. García-Martín et al. mit dem Titel "Solidphase microextraction gas chromatography-mass spectrometry (HS-SPME-GC-MS) determination of volatile compounds in spirits: Multivariate chemometric characterisation" aus Food Chemistry, Volume 118, Issue 2, 2010, Pages 456-461, ISSN 0308-8146, http://dx.doi.org/10.1016/j.foodchem.2009.04.105, ein Festphasen-Mikroextraktions-Gaschromatographie-Massenspektrometrieverfahren.

In WO 2004/106915 A1 wird ein Verfahren offenbart zur Verringerung eines Satzes von gesammelten LC-MS- oder LC-MS / MS-Daten, so dass echte chromatographische und MS-Peaks für die Verwendung in Metabonomika identifiziert werden können.

Die Druckschrift DE 10 2010 047427 A1 offenbart ein Verfahren zur selektiven Quantifizierung einzelner Proteine in einem Proteingemisch.

Es ist deshalb die Aufgabe der vorliegenden Erfindung, ein Verfahren bereitzustellen, welches kontinuierliches Aufreinigen von Biopharmazeutika ermöglicht und dabei schnell, robust, produktiv und kosteneffektiv ist.
Die Aufgabe wird durch die Gegenstände der unabhängigen Ansprüche gelöst. Bevorzugte Weiterbildungen ergeben sich aus den Unteransprüchen.
Ein Aspekt der Erfindung betrifft ein Verfahren zum Regeln zumindest einer Multisäulen-Chromatographie-Anordnung zum kontinuierlichen Prozess des Aufreinigens von Biopharmazeutika ggf. umfassend Virenfragmente und/oder Viren und/oder Proteinen bzw. Proteingemischen und/oder Gemische beinhaltend Viren, vorzugsweise in Lösung ggf. mit weiteren Komponenten in Lösung, aufweisend:
- Einbringen eines Multikomponentengemisches in eine Säule der Multisäulen-Chromatographie-Anordnung,
- Erfassen von mindestens einem multivariaten Signal mittels zumindest eines Detektors,
- Berechnen von zumindest einem Prozessparameter basierend auf dem multivariaten Signal mittels zumindest eines Datenverarbeitungsprogramms einer Recheneinheit durch Anwendung einer chemometrischen Methode und
- Regeln zumindest eines regelbaren Stellelements auf Basis des zumindest einen Prozessparameters zum Regeln des Aufreinigungsprozesses.

Vorteilhafterweise wurde gemäß der vorliegenden Erfindung erkannt, dass chemometrische Verfahren bzw. Methoden auch für Biopharmazeutika, insbesondere Proteingemische verwendet werden können, um anhand der multivariaten Signale, d.h. insbesondere eines oder mehrerer Spektren eine Datenauswertung durchführen zu können, obwohl die multivariaten Signale sehr ähnlich bzw. nahezu identisch sind. Insbesondere wurde erkannt, dass die chemometrischen Verfahren in einem kontinuierlichen Prozess eingesetzt werden können, auch wenn Gemische aufgereinigt werden, die deren Einzelkomponenten ähnliche oder nahezu identische multivariate Signale aufweisen.

Dabei steht im Vordergrund der vorliegenden Erfindung, dass es sich insbesondere um ein tatsächlich kontinuierliches Verfahren handelt, welches im Gegensatz zum Batch-Betrieb auch einer hohen Anzahl individueller Proben besonders vorteilhaft für die Biopharmazeutische Industrie ist. Der Ausdruck "kontinuierlich" schließt gemäß der vorliegenden Erfindung insbesondere ein, dass sowohl die Zu- als auch Abfuhr des Multi-Komponentengemischs bzw. des Produktes kontinuierlich ist. Die vorliegende Erfindung betrifft dabei bevorzugt die präparative Chromatographie, d.h. die Aufreinigung von Produktgemischen in produktionstechnischen Maßstäben - im Gegensatz zu einer rein analytischen Chromatographie.

Vorzugsweise kann das Verfahren die weiteren Schritte umfassen:
- Vergleichen des zumindest einen Prozessparameters mit zumindest einem Referenzparameter und
- Ermitteln zumindest eines Stellsignals auf Basis des Prozessparameters.

Das Verfahren der vorliegenden Erfindung erhält über zumindest einen Detektor ein oder mehrere multivariate Signale aus der Multisäulen-Chromatographie-Anordnung und nutzt mathematische Methoden, wie Partial-Least-Square-Regression, künstliche neuronale Netzwerke, Support-Vector-Regression, etc., um aus Berechnungen mit dem oder den multivariaten Signalen Information bezüglich des mindestens einen Prozessparameters zu extrahieren. Diese Informationen werden danach verwendet, um mittels zumindest eines regelbaren Stellelements den Prozess der Multisäulen-Chromatographie-Anordnung zu regeln, so dass ein möglichst optimales Ergebnis erreicht wird, insbesondere ein reines Produkt oder reine Komponenten.

Gemäß einer weiteren Ausführungsform verwendet das erfindungsgemäße Verfahren mindestens zwei Detektoren. Die mindestens zwei Detektoren können je nach Zielsetzung gleicher Art oder voneinander verschieden sein und unabhängige multivariate Signale bereitstellen.

Ein weiterer Aspekt der Erfindung betrifft eine Multisäulen-Chromatographie-Anordnung verwendbar für einen kontinuierlichen Prozess des Aufreinigens von Biopharmazeutika, aufweisend:
a) mindestens eine erste Trennsäule und eine zweite Trennsäule mit jeweils mindestens einem Eingang und jeweils mindestens einem Ausgang,
b) mindestens eine erste Zufuhrvorrichtung, welche zum Befördern von mindestens einem ersten Multikomponentengemisch geeignet ist, wobei die mindestens erste Zufuhrvorrichtung mit dem mindestens einen Eingang der ersten Trennsäule verbunden ist,
c) mindestens eine erste Abführvorrichtung, welche zum Ableiten eines zweiten Multikomponentengemisches geeignet ist, wobei die mindestens erste Abführvorrichtung mit dem mindestens einen Ausgang der ersten Trennsäule verbunden ist,
d) mindestens eine zweite Zufuhrvorrichtung, welche zum Befördern von einem zweiten Multikomponentengemisch geeignet ist, wobei die mindestens zweite Zufuhrvorrichtung mit dem mindestens einen Eingang einer zweiten Trennsäule verbunden ist,
e) mindestens eine zweite Abführvorrichtung, welche zum Ableiten eines dritten Multikomponentengemisches geeignet ist, wobei die mindestens zweite Abführvorrichtung mit dem mindestens einen Ausgang der zweiten Trennsäule verbunden ist,
f) mindestens einen Detektor zum Detektieren eines multivariaten Signals und
g) mindestens eine Recheneinheit mit mindestens einem Datenverarbeitungsprogramm mit mindestens einem chemometrischen Rechenverfahren,
wobei die mindestens eine erste Abführvorrichtung mit der mindestens einen zweiten Zufuhrvorrichtung verbunden ist;
wobei mindestens eine der ersten und zweiten Zufuhrvorrichtungen und/oder mindestens eine der ersten und zweiten Abführvorrichtungen mindestens ein steuerbares oder regelbares Stellelement aufweist;
wobei der mindestens eine Detektor vor mindestens einem Eingang und/oder nach mindestens einem Ausgang angeordnet ist; und
wobei der mindestens eine Detektor mit der mindestens einen Rechnereinheit gekoppelt ist; wobei die mindestens eine Recheneinheit, mit dem mindestens einen steuerbaren bzw. regelbaren Stellelement gekoppelt ist und wobei die mindestens eine Recheneinheit ausgelegt ist,
- den zumindest einen Prozessparameter basierend auf dem multivariaten Signal zu berechnen;
- zumindest einen Prozessparameters mit zumindest einem Referenzparameter zu vergleichen;
- zumindest ein Stellsignal auf Basis des Prozessparameters zu ermitteln; und
- zumindest ein regelbares Stellelement auf Basis des Prozessparameters zum Regeln des Aufreinigungsprozesses zu regeln.

Vorteilhafterweise können mit einer derartigen Multisäulen-Chromatographie-Anordnung die für ein kontinuierliches chromatographisches Verfahren benötigten Prozessparameter in Echtzeit bestimmt bzw. ermittelt und geregelt werden. Dies hat weiter zum Vorteil, dass ein Aufreinigen eines Multikomponentengemisches in einem kontinuierlichen Verfahren ermöglicht wird und ein möglichst optimales Ergebnis erreicht wird, insbesondere ein reines Produkt oder reine Komponenten aus einem Multikomponentengemisch.

Wie erwähnt basiert die vorliegende Erfindung auf einem tatsächlich kontinuierlichen Verfahren, welches insbesondere die präparative Chromatographie, d.h. die Aufreinigung von Produktgemischen in produktionstechnischen Maßstäben betrifft. Demnach ist die hierin definierte Multisäulen-Chromatographie-Anordnung eingerichtet, ein derart kontinuierliches und vorzugsweise präparatives Aufreinigungsverfahren zu gewährleisten.

Gemäß der vorliegenden Erfindung können die Multikomponentengemische komplexe Mischungen sein, insbesondere von Zellkulturüberständen und/oder Überstände von Fermentationen.

In Hinsicht auf diese Anmeldung können Biopharmazeutika Arzneistoffe sein, die mit Mitteln der Biotechnologie und gentechnisch veränderten Organismen hergestellt werden. Biopharmazeutika können die oben genannten Multikomponentengemische umfassen bzw. daraus bestehen. Biopharmazeutika können Viren und/oder Virenfragmente als einzige Komponente oder eine Komponente von mehreren Komponenten umfassen. Alternativ oder zusätzlich können Biopharmazeutika Proteine und/oder Polypeptide als einzige Komponente oder eine Komponente von mehreren Komponenten umfassen.

Ebenso kann ein Proteingemisch, das aufgereinigt wird, die oben genannten Multikomponentengemische umfassen bzw. daraus bestehen.

Die Aufzeichnung eines oder mehrerer Signale in der Multisäulen-Chromatographie-Anordnung erfolgt durch den mindestens einen Detektor, welcher in einem Bereich des Zuflusses und/oder des Abflusses einer Trennsäule angeordnet sein kann. Der mindestens eine Detektor ist mit mindestens einer Recheneinheit signaltechnisch verbunden. Die von dem Detektor detektierten bzw. aufgezeichneten Signale können mittels eines vorzugsweise chemometrischen Modells bzw. einer chemometrischen Methode von zumindest einem Datenverarbeitungsprogramm der Recheneinheit verarbeitet werden.

Gemäß einer weiteren Ausführungsform umfasst die erfindungsgemäße Multisäulen-Chromatographie-Anordnung mindestens zwei Detektoren. Die mindestens zwei Detektoren können je nach Zielsetzung gleicher Art oder voneinander verschieden sein und unabhängige multivariate Signale bereitstellen.

Die Chemometrie umfasst mathematische und statistische Methoden zur Planung und Auswahl optimaler Messverfahren und Experimente, und wird auch zur Gewinnung maximaler chemischer Information bei der Analyse chemischer Daten verwendet. Neben den statistisch-mathematischen Methoden gehören auch Probleme eines computergestützten, vernetzten Labors, Methoden zur Verwaltung von chemischen und spektroskopischen Datenbanken sowie Verfahren der künstlichen Intelligenz zum Gegenstand der Chemometrie (CA, Römpp-Online; http://d-nb.info/gnd/4299578-4).

Die entsprechende Auswertung kann beispielsweise die Berechnung der Einzelkonzentrationen und/oder Klassierung nach richtig oder falsch beinhalten. Die Prozessentscheidung bzw. Prozesskontrolle bzw. Prozesssteuerung erfolgt dann aufgrund des Resultates der Auswertung der beispielsweise chemometrischen Methode. So können beispielsweise die Verschaltung der Säulen untereinander verändert, quantitative Signale abgegriffen, die Dauer bestimmter Phasen eines Prozesses festgelegt und/oder Robustheitskontrollen durchgeführt werden.

Eine derartige Prozesskontrolle kann insbesondere in kontinuierlichen Chromatographieprozessen von Vorteil sein, da sie schnell und robust ist. Die weiteren Vorteile sind zum einen die Durchführbarkeit des Verfahrens in Echtzeit, zum anderen die Möglichkeit zur quantitativen Auswertung und Robustheitsanalyse. Der Begriff Echtzeit charakterisiert den Betrieb informationstechnischer Systeme, die bestimmte Ergebnisse zuverlässig innerhalb einer vorbestimmten Zeitspanne, zum Beispiel in einem festen Zeitraster, liefern können.

Die Zeitspanne kann vorzugsweise unter 1 Minute, weiter bevorzugt weniger als 30 Sekunden, auch bevorzugt weniger als 10 Sekunden, noch weiter bevorzugt weniger als 5 Sekunden und am bevorzugtesten weniger als eine Sekunde sein.

In der kontinuierlichen Chromatographie werden mehrere Trennsäulen in einer Anordnung derart miteinander verbunden, so dass je nach Anforderungen die Säulen parallel und/oder in Reihe geschaltet werden können und/oder dass jede Säule mit jeder anderen Säule der Multisäulen-Chromatographie-Anordnung verschaltet sein kann. So kann ein chromatographischer Lauf beispielsweise mit einer Säule, mit mehreren oder mit allen Säulen gleichzeitig durchgeführt werden.

Bei herkömmlichen chromatographischen Verfahren besteht ein Chromatographie-Zyklus aus mehreren aufeinanderfolgenden Schritten, wie das Beladen, Waschen, Eluieren und Regenerieren der Säule. In der kontinuierlichen Chromatographie werden üblicherweise mehrere identische Säulen verwendet. Die oben genannten Schritte können somit beispielsweise gleichzeitig stattfinden, wobei in der Regel zur gleichen Zeit in jeder einzelnen Säule ein anderer Schritt stattfindet.

Somit kann mit der kontinuierlichen Chromatographie die Verarbeitungszeit verkürzt werden. Dadurch ist das Verfahren verglichen mit herkömmlichen Batch-Verfahren wesentlich wirtschaftlicher und effizienter.

Die Multisäulen-Chromatographie-Anordnung der vorliegenden Erfindung kann eine handelsübliche Multisäulen-Chromatographie-Anordnung und/oder eine Anordnung einzelner Einzelsäulen-Chromatographie-Anordnungen sein. Der Einfachheit halber werden in dieser Anmeldung die Chromatographiesäulen bzw. Trennsäulen mit Säulen bezeichnet. Weiter kann eine Säule aber auch eine Membrananordnung oder ein Monolith sein. Monolithe sind Trennungsmedien in einer Form, die mit einem einzigen großen Partikel verglichen werden kann und welche keine zwischenpartikulären Hohlräume aufweist. Mit Säule kann auch ein Bett mit gepackten Fasern gemeint sein, wobei die Fasern herkömmlicherweise funktionalisiert sind. Auch ein Bett gepackt mit Adsorberpartikel kann hier mit Säule gemeint sein.

Die jeweiligen Säulen haben vorzugsweise einen Eingang und vorzugsweise einen Ausgang. Es kann jedoch auch vorgesehen sein, dass eine oder mehrere Säulen auch eine Mehrzahl an Eingängen und/oder Ausgängen aufweisen können.

Das Einbringen eines Multikomponentengemisches in eine Säule der Multisäulen-Chromatographie-Anordnung erfolgt über eine Zufuhrvorrichtung. An jeder Säule ist mindestens eine Zufuhrvorrichtung angeordnet. Es kann jedoch auch vorgesehen sein, dass Lösungsmittel und/oder Reinigungslösungen eingeleitet werden können.

Die zumindest eine Zufuhrvorrichtung kann derart ausgestaltet sein, so dass insbesondere Biopharmazeutika, beispielsweise Multikomponentengemische aus Proteinen, in die Säule zugeführt werden können.

Die Zufuhrvorrichtung kann mit einer Produktionskette für Biopharmazeutika, beispielsweise einem Bioreaktor verbunden sein. Weiter kann die Zufuhrvorrichtung auch zumindest eine Pumpe umfassen, welche ein Multikomponentengemisch über die Zufuhrvorrichtung in die Säule einführt bzw. leitet. Ein Multikomponentengemisch kann mit einer mobilen Phase gemischt bzw. verdünnt werden. Die Verdünnung des Multikomponentengemisches kann beispielsweise vor der Zufuhrvorrichtung erfolgen. Es kann jedoch auch vorgesehen sein, dass das Mischen des Multikomponentengemisches mit der mobilen Phase in der Zufuhrvorrichtung erfolgt.

Das Multikomponentengemisch kann jedoch auch vor der Chromatographie aufkonzentriert werden, so dass eine mögliche Verschiebung eines Absorptionsgewichts vermieden werden kann.

Aufgrund der unterschiedlichen Wechselwirkung der einzelnen Komponenten eines Multikomponentengemisches mit der stationären und der mobilen Phase der Säule, werden die einzelnen Komponenten während des chromatographischen Laufs räumlich aufgetrennt.

Nach bzw. hinter zumindest einer Säule der Multisäulen-Chromatographie-Anordnung ist ein Detektor angeordnet. Dies kann jedoch auch bedeuten, dass der Detektor vor einer nächsten Säule angeordnet sein kann bzw. zwischen zwei Säulen angeordnet sein kann. Der Detektor kann auch vor einer Säule angeordnet sein und ein weiterer Detektor nach der Säule. Es können auch mehrere Detektoren vor und nach jeder Säule angeordnet sein. Der zumindest eine Detektor ist ausgelegt, um multivariate Signale zu erfassen. Der Detektor detektiert ein multivariates Signal auf, sobald eine Komponente bzw. ein Komponentengemisch des ursprünglichen Multikomponentengemisches den Detektor passiert.

Bevorzugt ist ein Detektor nach einer ersten Säule der Multisäulen-Chromatographie-Anordnung angeordnet. Weiter bevorzugt ist nach mehreren oder nach jeder Säule ein Detektor angeordnet. Bei der Verwendung von mindestens zwei Detektoren können diese je nach Bedarf und Prozessführung an verschiedenen Positionen der Multisäulen-Chromatographie-Anordnung angeordnet sein.

Vorzugsweise ist der mindestens eine Detektor ein Detektor, welcher mindestens ein multivariates UV-, Vis-, Fluoreszens-, Streulicht-, Infrarot- und/oder Ramansignal detektieren kann. Der zumindest eine Detektor ist mit zumindest einer Recheneinheit gekoppelt bzw. signaltechnisch verbunden bzw. datentechnisch verbunden. Ein multivariates Signal kann somit beispielsweise ein Spektrum sein, wie zum Beispiel ein Absorptionsspektrum, ein Infrarotspektrum und/oder ein Fluoreszensspektrum. In anderen Worten kann ein mulitvariates Signal Strahlungsintensitäten als Funktion der Wellenlänge der Strahlung beinhalten, wohingegen ein univariates Signal lediglich genau eine Strahlungsintensität bei genau einer Wellenlänge beinhaltet. Bei der Verwednung von mindestens zwei Detektoren können diese Signale gleicher Art (bspw. jeweils UV-Signale) oder Signale verschiedener Art (bspw. UV- und IR-Signale) bereitstellen.

Mit einem multivariaten Signal wird hier ein Signal bezeichnet, dass im Gegensatz zum univariaten Signal nicht nur aus einem Wert besteht, sondern auf vielen unabhängigen Signalen, z. B. zeitaufgelöste Spektraldaten. Diese Signale können also (stark) korrelieren. Andere denkbare multivariate Signale können Signale sein, welche beispielsweise mittels UV-, Vis-, Fluoreszens-, Infrarot-, Ramanspektroskopie und/oder Streulicht erhalten können.

Das zumindest eine multivariate Signal wird dann zur Berechnung von zumindest einem Prozessparameter verwendet. Das durch den Detektor detektierte multivariate Signal kann von der zumindest einen Recheneinheit empfangen werden. Die zumindest eine Recheneinheit umfasst zumindest ein Datenverarbeitungsprogramm mit einem chemometrischen Verfahren/Methode und/oder führt ein Datenverarbeitungsprogramm mit einem chemometrischen Verfahren/Methode aus. Das Berechnen des zumindest einen Prozessparameters wird mittels des mindestens einen Datenverarbeitungsprogramms durchgeführt.

Prozessparameter kann einer der folgenden Parameter oder können mehrere der folgenden Parameter sein oder umfassen:
- pH-Wert,
- Leitfähigkeit,
- Absorption des Effluenten,
- Zielproteingehalt,
- Konzentration an koeluierenden Kontaminaten,
- Produktkonzentration,
- Reinheit,
- Ausbeute,
- Produktionsrate und
- In and out of specification.

Mit anderen Worten können Prozessparameter alle Parameter sein, welche im Prozess überwacht, geregelt und/oder gesteuert werden können, insbesondere Konzentrationen, Reinheiten und/oder ob der Prozess innerhalb der Spezifikationen abläuft.

Vorzugsweise kann das zumindest eine Datenverarbeitungsprogramm Prozessparameter wie beispielsweise die Konzentration mindestens einer oder mehrerer oder aller Komponenten eines Multikomponentengemisches berechnen. Weiter bevorzugt kann der zumindest eine Prozessparameter beispielsweise auch die Produktreinheit, Ausbeute, Produktionsrate, Wirtschaftlichkeit der Anlage und/oder In and out of specification (Einhaltung von Qualitätsrichtlinien) sein.

Der bzw. die Prozessparameter werden dann mit zumindest einem Referenzparameter verglichen. Mit anderen Worten können die ermittelten Prozessparameter (beispielsweise zugehörig zu Fraktionen) auf die Konzentration an relevanten Spezies untersucht werden. Beispielsweise können Absorptionsspektren entsprechend der Zeitdauer einer Fraktion gemittelt werden.

Ein auf diese Weise dekonvoliertes Signal kann dazu verwendet werden, die chromatographische Aufreinigung zu regeln. Hierbei wird, je nach Anwendung, das dekonvolierte Signal dazu verwendet, Ventile und/oder Pumpen oder andere steuerbare bzw. regelbare Elemente der Multisäulen-Chromatographie-Anordnung zu regeln.

Mit anderen Worten kann das Verfahren der vorliegenden Erfindung auch die Schritte umfassen:
- Ermitteln der Produktkonzentration im Multikomponentengemisch an der Zufuhrvorrichtung mittels des Signals des Detektors, welcher vorzugsweise an einem Ausgang einer Säule angeordnet ist,
- Berechnen der aktuellen Produktmasse mittels der ermittelten Produktkonzentration und einer aktuellen Flussrate,
- Vergleichen der aktuell geladenen Produktmasse mit einem Stellwert, und
- Regeln des mindestens einen Stellelements, um insbesondere die Verschaltung der Säulen basierend auf dem Vergleich der aktuell geladenen Masse und den Stellwert einzustellen.

Dies ist besonders vorteilhaft, da somit ein Aufreinigungsprozess optimiert und die Ausbeute gesteigert werden kann.

Ein Training und eine Validierung des mathematischen Modells können anhand eines statistischen Verfahrens erfolgen. Hierbei kann beispielsweise der Strom aus Multikomponentengemisch in einer mobilen Phase, der in dieser Anmeldung als Feed bezeichnet wird, mit variablen Anteilen an Produkt und Kontaminanten versetzt sein, um Prozessvariation während eines kontinuierlichen Prozesses nachzustellen. Zusätzlich kann eine Verweilzeit des Produktes in der Säule während der Beladungsphase variiert werden.

Vorzugsweise kann die Berechnung des zumindest einen Prozessparameters mittels des zumindest einen Datenverarbeitungsprogramms durchgeführt werden, wobei das Datenverarbeitungsprogramm ein chemometrisches Verfahren umfassen oder ausführen kann. Das chemometrische Verfahren kann unter anderem beispielsweise Multiple Lineare Regression, Principle Component Regression, Partial Least Squares (PLS) Regression, Principal Component Analysis, Berechnungen mittels Neuronaler Netze (NN), Support Vector Machines und/oder Multivariate Curve Resolution sein oder umfassen. Es ist auch eine Kombination dieser Verfahren denkbar.

Ein Training und eine Validierung eines mathematischen Modells können anhand mehrerer Chromatographieläufe mit beispielsweise variabler Länge von Salzgradienten in einem Kationentauscherschritt erfolgen. Zum Training können Komponentenkonzentrationen mittels analytischer Verfahren genau bestimmt werden.

Der Begriff Kationenaustauscherschritt ist ein Aufreinigungsschritt basierend auf Kationenaustauschchromatographie.

Hierbei können die Variationen der Gradientenlänge zu unterschiedlichen Konzentrationsverhältnissen der Spezies im Effluenten, die den Kalibrierungsraum aufspannen, führen. Zusätzlich kann innerhalb dieses Raums ein Validierungsschritt durchgeführt werden. Aus den Daten können beispielsweise sowohl ein Partial Least Squares Regression Modell als auch beispielsweise ein Künstliches Neuronales Netzwerk kalibriert werden.

Beispielsweise kann ein kalibriertes PLS Modell dazu verwendet werden, die Fraktionierung eines Zielproteins in Echtzeit in einem Polishing Schritt zu regeln. Da sich bei herkömmlichen Verfahren die Auftrennung von Produkt und Kontaminanten von Batch zu Batch aufgrund von Prozessschwankungen bei der Herstellung des Multikomponentengemischs verändern kann und Produkt und Kontaminanten nicht selektiv detektiert werden können, führt dies zu schwankender Produktqualität. Gemäß der vorliegenden Erfindung kann mit Hilfe des dekonvolierten multivariaten Signals vorteilhafterweise auch bei Prozesschwankungen bei der Herstellung des Multikomponentengemischs selektiv detektiert werden, zu welchem Zeitpunkt die gewünscht Produktqualität erreicht ist und mit Hilfe dieser Information ein regelbares Stellelement, beispielsweise ein Ventil der Multisäulen-Chromatographie-Anordnung zur optimierten Fraktionierung des Produktes geregelt werden.

Insgesamt kann das Verfahren der vorliegenden Erfindung zur Prozessüberwachung und -kontrolle dazu verwendet werden, dass eine chromatographische Auftrennungen von Multikomponentengemischen geregelt wird. Dies ist insbesondere für kontinuierliche Prozesse zentral, da hier der Prozess nicht für eine offline Analytik angehalten werden kann und sich Fehler von Zyklus zu Zyklus aufaddieren können. Mit Hilfe des Verfahrens der vorliegenden Erfindung kann jedoch der stationäre Zustand einfach und ohne Unterbrechung für offline Analytik kontrolliert werden.

Das Verfahren der vorliegenden Erfindung ist insbesondere für einen kontinuierlichen Prozess des Aufreinigens von insbesondere Biopharmazeutika geeignet. Die detektierten Signale und die Auswertung mittels mathematischer Methoden ist hierbei insbesondere von Vorteil, da die daraus berechneten Prozessparameter in Echtzeit erhalten werden und ein erfindungsgemäßes kontinuierliches chromatographisches Verfahren, somit schnell, robust und effizient ist. Dies hat weiter zum Vorteil, dass beim Aufreinigen eines Multikomponentengemisches ein optimales Ergebnis erreicht wird, insbesondere ein im Wesentlichen reines Produkt oder im Wesentlichen reine Komponenten aus einem Multikomponentengemisch.

Die Verwendung des Begriffs *"reines Produkt"* bzw. des Begriffs *"rein"* hängt prinzipiell vom beispielsweise verarbeiteten Protein und Prozess ab. Auch hat sich die Bedeutung *"rein"* in den Fachkreisen über die vergangenen Jahre verändert. Zwischen verschiedenen Kontaminanten werden ebenfalls Unterschiede gemacht. Besonders Viren und Host Cell Proteins müssen sehr stark abgereinigt werden.

Je nach Anwendungsfall können Detektoren an unterschiedlichen Stellen in der Multisäulen-Chromatographie-Anordnung angebracht und geregelt werden.

Vorzugsweise kann das Verfahren der vorliegenden Erfindung die weiteren Schritte umfassen:
- Auswerten eines multivariaten Signals des mindestens einen Detektors mittels der zumindest einen Recheneinheit, wobei der Detektor vorzugsweise an einem Ausgang einer Säule angeordnet ist, so dass die Komponentenkonzentration im Multikomponentengemisch an der Abführvorrichtung ermittelt wird,
- Bestimmen der Saturierung und/oder des Durchbruchspunktes der mindestens einen Säule mittels der ermittelten Komponentenkonzentration und
- Regeln des mindestens einen Stellelements, um die Verschaltung der Säulen einzustellen basierend auf der ermittelten Saturierung und/oder dem Durchbruchspunkt.

Beispielsweise kann das Verfahren angewendet werden, um die Beladungsdauer im kontinuierlichen Prozess zu regeln. Bei der kontinuierlichen Produktion von Biopharmazeutika kann die Produktkonzentration durch Variabilität im Upstream schwanken. Jedoch kann die Feedkonzentration mit herkömmlichen, univariaten Detektoren nicht in der Feedleitung detektiert werden. Da die Säulen im Regelfall jedoch eine begrenzte Kapazität aufweisen, die sich zudem durch Säulenalterung ändern kann, ist eine Ermittlung der geladenen Produktmasse von zentraler Wichtigkeit. Dies kann mit Hilfe der dekonvolierten, multivariaten Signale aus beispielsweise zwei Detektoren, welche jeweils vor und nach zumindest einer Säule geschaltet werden können, in Echtzeit erreicht werden.

Beispielsweise, wird der Feed bzw. der Strom aus Multikomponentengemisch in einer mobilen Phase über einen ersten Detektor bzw. an einem ersten Detektor vorbei, welcher vor einer ersten Säule angeordnet ist, auf die erste Säule geleitet. Anschließend wird der Feed über bzw. an einen zweiten Detektor vorbei auf eine zweite Säule geleitet, wobei der zweite Detektor nach der ersten Säule angeordnet ist. Durch die Integration des dekonvolierten multivariaten Signals des ersten Detektors kann fortlaufend, d.h. kontinuierlich bzw. online die aufgegebene Produktmasse berechnet werden. Da sich die Kapazität der Säulen durch Alterung verändern kann, erfolgt die Regelung der Säulenverschaltung mit Hilfe des dekonvolierten, multivariaten Signals aus dem zweiten Detektor. Dieser befindet sich in diesem Beispiel immer auf der Downstreamseite der Säule. Wird ein bestimmter Grenzwert der Produktkonzentration am Ausgang der ersten Säule erreicht, kann die Stellung eines Stellelements, beispielsweise eines Ventils bzw. einer Pumpe, so verändert werden, dass der Feed auf die zweite Säule gepumpt bzw. geleitet und über den zweiten Detektor auf eine dritte Säule geleitet wird. Der oben beschriebene Prozess kann fortwährend für alle Säulen zyklisch wiederholt werden.

Vorzugsweise kann das Verfahren der vorliegenden Erfindung die weiteren Schritte umfassen:
- Ermitteln der Konzentration der Einzelkomponenten, und zwar beispielsweise einer, mehrerer bevorzugt aller Einzelkomponenten, durch Auswertung des zumindest einen multivariaten Signals zumindest eines Detektors mittels der mindestens einen Recheneinheit, wobei der zumindest eine Detektor zwischen zwei Säulen angeordnet ist,
- Berechnen eines Massenanteils von mindestens einer Komponente,
- Vergleichen des ermittelten Massenanteils mit einem Stellwert mittels der Recheneinheit und
- Regeln des mindestens einen Stellelements, um die Verschaltung der Säulen einzustellen und/oder Fraktionierung eines Produktes und/oder Verwerfen von Fraktionen basierend auf den Stellwert.

Beispielsweise kann das Verfahren angewendet werden, um die Fraktionierung eines Multikomponentengemisches im kontinuierlichen Prozess durchzuführen. Bei der Produktelution von der Säule im kontinuierlichen Verfahren muss über ein Ventil, welches vorzugsweise nach den Säulen einer Multisäulen-Chromatographie-Anordnung angeordnet ist, die Entscheidung getroffen werden, ob der Effluent fraktioniert, rezykliert oder verworfen wird.

Mit anderen Worten kann das Verfahren der vorliegenden Erfindung weiter ein Kontrollieren einer Rezyklierung von unvollständig aufgetrennten Bereichen umfassen.

Durch Prozessschwankungen kann sich die Auftrennung von Produkt und Kontaminanten im kontinuierlichen Prozess verändern.

Da Produkt und Kontaminanten mit herkömmlichen Methoden nicht selektiv detektiert werden können, kann eine prozessorientierte Regelung des oben beschriebenen Ventils als Stellelement über univariate Messmethoden komplex sein. Hierdurch können sich im schlechtesten Fall Fehler aufaddieren und der Prozess kann instabil werden. Dies kann sich negativ auf die Produktqualität und die Ausbeute auswirken.

Mit Hilfe des dekonvolierten multivariaten Signals aus einem Detektor, welches vorzugsweise nach den Säulen des Multisäulen-Chromatographie-Anordnung und vor dem Ventil als Stellelement angeordnet ist, kann dagegen selektiv detektiert werden, zu welchem Zeitpunkt die gewünschte Produktqualität oder Ausbeute gegeben ist. Mit Hilfe dieser Information kann das Ventil geregelt werden.

Mit anderen Worten kann das Verfahren der vorliegenden Erfindung vorzugsweise weiter die Schritte umfassen:
- Berechnen neuer optimierter Prozessparameter mittels eines mathematischen Modells der Recheneinheit anhand des zumindest einen berechneten Prozessparameters und
- Einstellen des Stellelements auf Basis der berechneten Prozessparameter, um neue optimierte Prozessparameter zu erhalten.

Der Gegenstand der Erfindung wird nachfolgend anhand von Ausführungsbeispielen beschrieben.
Figur 1 zeigt einen Versuchsaufbau im Batchmodus einer Chromatographie-Anordnung (schematische Darstellung eines *Äkta pure* der Firma GE Healthcare, Chalfont St. Giles, UK) mit einem Dioden Array Detektor (DAD).
Figur 2 zeigt einen beispielhaften Informationsfluss für die Kalibrierung eines mathematischen Modells.
Figur 3 zeigt einen beispielhaften statistischen Versuchsplan zur Modellkalibrierung und Validierung für die Regelung der Beladungsdauer.
Figur 4 zeigt einen beispielhaften Vergleich einer PLS-Modellvorhersage mit einer Referenzanalytik.
Figur 5 zeigt einen beispielhaften Vergleich einer NN-Modellvorhersage mit der Referenzanalytik.
Figur 6 zeigt einen beispielhaften Vergleich einer PLS-Modellvorhersage mit der Referenzanalytik.
Figur 7 zeigt einen beispielhaften Vergleich der NN-Modellvorhersage mit der Referenzanalytik.
Figur 8 zeigt ein Rohrleitungs- und Instrumentenfließschema zur Kontrolle kontinuierlicher Chromatographie.
Figur 9 zeigt ein Flussdiagramm für allgemeine Vorarbeiten.
Figur 10 zeigt ein Flussdiagramm für ein allgemeines Beispiel für eine Prozesskontrolle.
Figur 11 zeigt ein Flussdiagramm eines spezifischen Beispiels für eine Vorarbeit.
Figur 12 zeigt ein Flussdiagramm für ein spezifisches Beispiel für eine Prozesskontrolle.
Figur 13 zeigt zwei Absorptionsspektren von Antikörper und Antikörper-Aggregaten.
Figur 14 zeigt den spektralen Unterschied im UV Bereich zwischen Antikörper und Antikörper-Aggregaten (A) und ein zugehöriges Differenzspektrum (B).

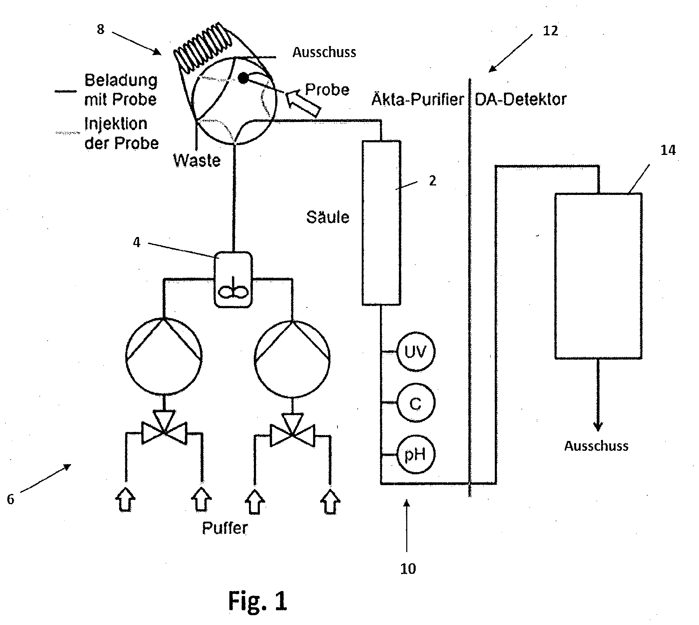

Figur 1 zeigt einen Versuchsaufbau für ein Experiment mit einer Chromatographie-Anordnung im Batchmodus. Zu sehen ist ein Vorrat von einer mobilen Phase 6, ein Stellelement 4, eine Säule 2, eine Zufuhrvorrichtung 8, interne Detektoren 10, ein Diodenarray Detektor (DAD) 12 und eine Fraktionsvorrichtung 14. Die hier beispielhaft beschriebene Chromatographie-Anordnung ist unter der Bezeichnung Äkta pure von GE Healthcare, Chalfont St. Giles, UK vertrieben Chromatographie-Anordnung. Zusätzlich ist ein DAD 12 in der Chromatographie-Anordnung angeordnet, welcher unter der Bezeichnung Ultimate 3000 von Dionex, Fisher Scientific, USA, vertrieben wird. Wie bereits oben beschrieben, können für das Training und die Validierung der verwendeten mathematischen Modelle mehrere chromatographische Auftrennungen unter verschiedenen Bedingungen durchgeführt werden. Der Effluent der Säule 2 wird dabei bei allen Experimenten über den DAD 12 geleitet und anschließend fraktioniert. Dabei greift der DAD 12 kontinuierlich Absorptionsspektren ab.

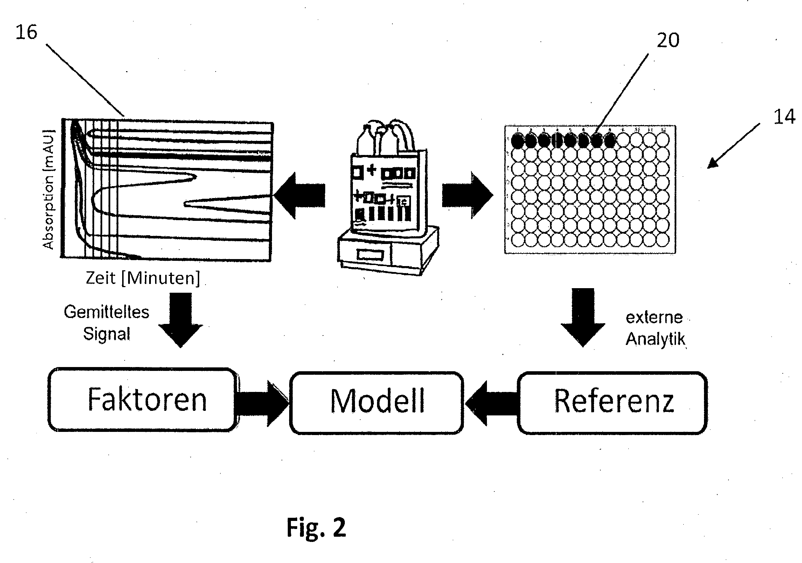

Wie in Figur 2 dargestellt können die Fraktionen 20 dann mit einer externen Referenzanalytik 18 (analytische Chromatographie) auf die Konzentration an relevanten Spezies untersucht werden. Die Absorptionsspektren 16 wurden entsprechend der Zeitdauer einer Fraktion 20 gemittelt. Anschließend werden die mathematischen Modelle mit den Trainingsdaten kalibriert und anhand der Validierungsdaten überprüft.

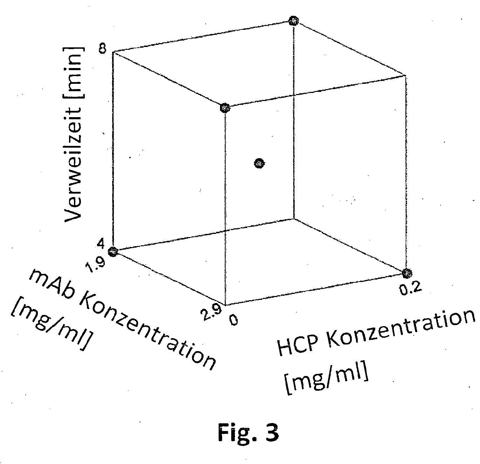

Ein erstes Anwendungsbeispiel zeigt die Regelung der Beladungsdauer. Das Training und die Validierung des mathematischen Modells erfolgen anhand eines statistischen Versuchsplans, gezeigt in Figur 3. Hierbei wird der Feed mit variablen Anteilen an Produkt und Kontaminanten versetzt, um Prozessvariation während eines kontinuierlichen Prozesses nachzustellen. Zusätzlich werden die Verweilzeit des Produktes in der Säule 2 während der Beladungsphase variiert. Der Zentrumspunkt des statistischen Versuchsplans stellt den Validierungslauf dar.

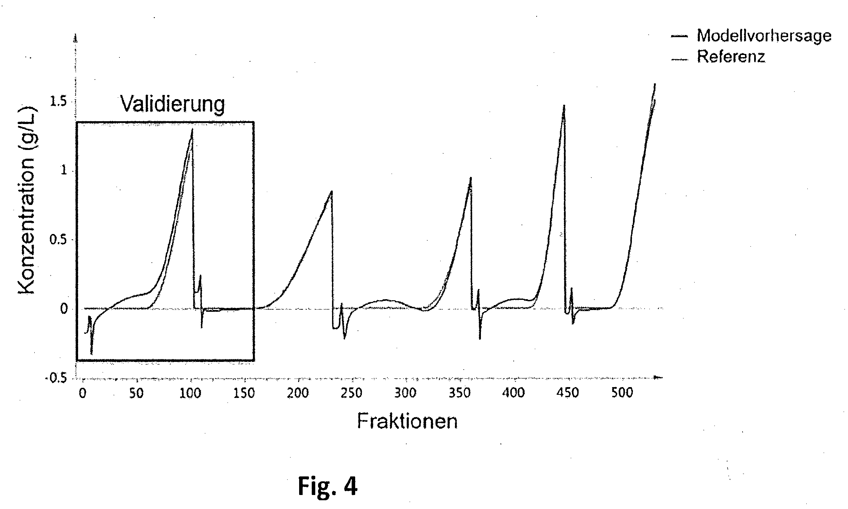

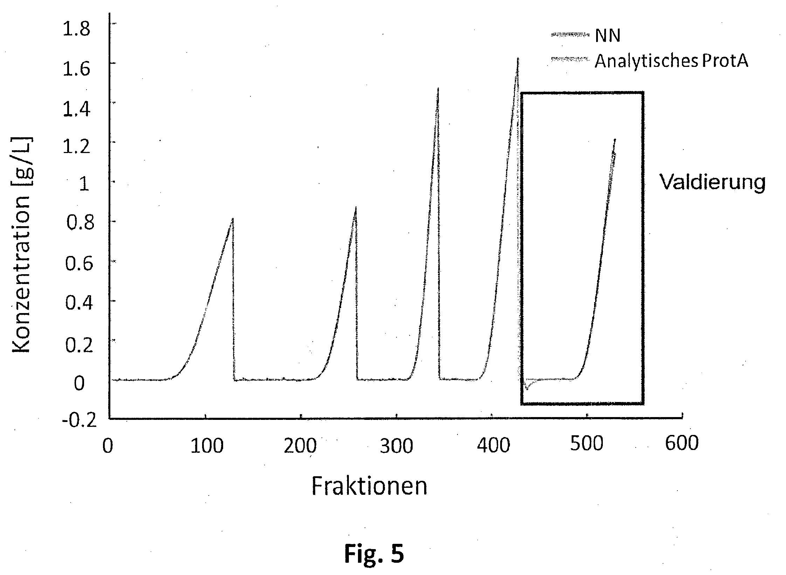

Aus den Daten werden sowohl ein Partial Least Squares Regression (PLS) Modell als auch ein Künstliches Neuronales Netzwerk (NN) kalibriert bzw. trainiert. Ein Vergleich der Modellvorhersage und der Referenzanalytik für die Trainings- und Validierungsdaten ist in Figur 4 für das PLS-Modell, bzw. in Figur 5 für das NN gezeigt.

Das kalibrierte PLS-Model kann im Anschluss dazu verwendet werden, die Beladungsphase während einer Protein Chromatographie zu steuern. Vorteilhaft hierbei ist, dass das kalibrierte PLS-Model für die Online-Prozessüberwachung verwendet werden kann und somit eine kontinuierliche Aufreinigung von Multikomponentengemischen ermöglicht, ohne dass eine offline Analytik des Feeds notwendig ist. Da die Produktkonzentration gleichzeitig variabel ist und sich auch die Kapazität der Säule durch Alterung verändern kann, muss bei jedem neuen Batch der Titer zunächst offline ermittelt werden, bevor der Prozess weitergefahren werden kann.

Zusätzlich müssen aufwendige Studien durchgeführt werden, um die Säulenalterung zu untersuchen. Mit Hilfe des dekonvolierten multivariaten Signals kann dagegen am Ausgang der Säule ermittelt werden, wenn das Produkt durchbricht. Mit Hilfe dieser Information kann ein entsprechendes Ventil als Stellelement geschaltet und der Pumpvorgang des Feeds zu einem geeigneten Zeitpunkt beendet werden.

Ein weiteres beispielhaftes Anwendungsbeispiel ist die Steuerung der Fraktionierung eines Zielproduktes.

Das Training und die Validierung des mathematischen Modells erfolgen anhand mehrerer Chromatographieläufe mit variabler Länge der Salzgradienten (1, 3, 5, 7 Säulenvolumen [CV]) in einem Kationentauscherschritt. Hierbei führt die Variation der Gradientenlänge zu unterschiedlichen Konzentrationsverhältnissen der Spezies im Effluent, die den Kalibrierungsraum aufspannen. Zusätzlich wird ein Validierungslauf innerhalb dieses Raums durchgeführt.

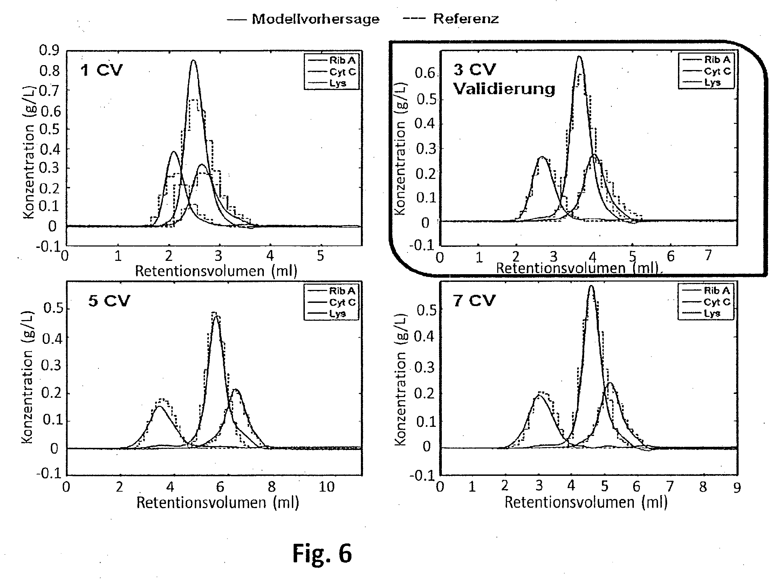

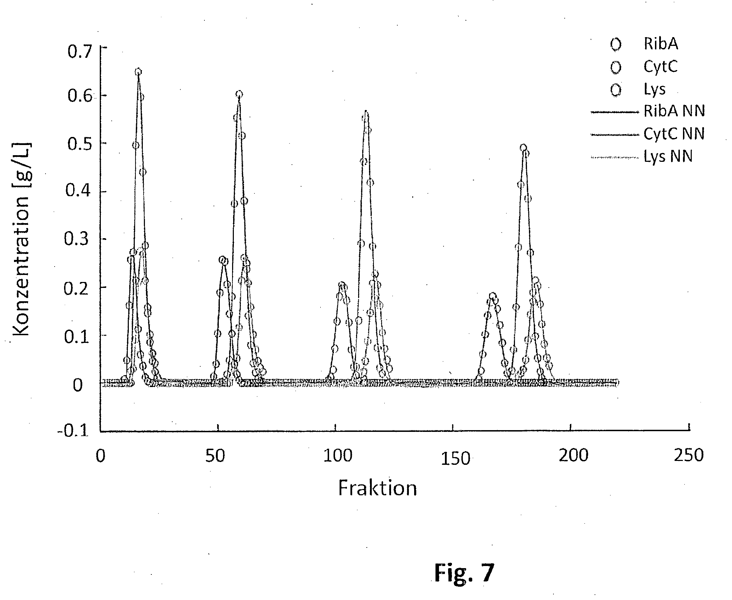

Aus den Daten werden sowohl ein Partial Least Squares Regression (PLS) Modell als auch ein Künstliches Neuronales Netzwerk (NN) kalibriert. Ein Vergleich der Modellvorhersage und der Referenzanalytik für die Trainings- und Validierungsdaten ist in Figur 6 für das PLS-Modell, bzw. in Figur 7 für das NN gezeigt.

Das kalibrierte PLS-Modell wird im Anschluss dazu verwendet, die Fraktionierung eines Zielproteins in Echtzeit in einem Polishing Schritt zu regeln und hierdurch zu optimieren. Das Problem, welches hierbei gelöst wird, ist dass sich die Auftrennung von Produkt und Kontaminanten von Batch zu Batch aufgrund von Prozessschwankungen verändern kann. Da Produkt und Kontaminanten nicht selektiv detektiert werden können, führt dies zu schwankender Produktqualität. Mit Hilfe des dekonvolierten multivariaten Signals kann dagegen selektiv detektiert werden, zu welchem Zeitpunkt die gewünscht Produktqualität erreicht ist und mit Hilfe dieser Information das Ventil zur Fraktionierung des Produktes gesteuert werden.

Insgesamt kann das erfindungsgemäße Verfahren zur Prozessüberwachung und -kontrolle dazu verwendet werden, chromatographische Auftrennungen zu steuern. Dies ist insbesondere für kontinuierliche Prozesse zentral, da hier der Prozess nicht für eine Offline-Analytik angehalten werden kann und sich Fehler von Zyklus zu Zyklus aufaddieren können. Mit Hilfe des Verfahrens der vorliegenden Erfindung kann jedoch der stationäre Zustand einfach kontrolliert werden.

Im Folgenden wird beispielhaft die Durchführung der Anwendungsbeispiele in kontinuierlicher Chromatographie beschrieben.

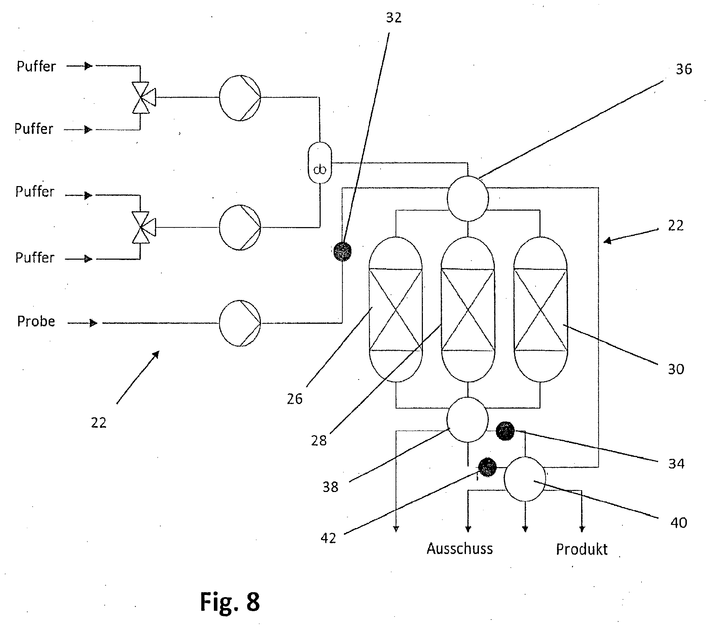

Das oben beschriebene Verfahren zur Prozesskontrolle kann in kontinuierlicher Chromatographie verwendet werden. Die detektierten Signale und die Auswertung mittels mathematischer Methoden bleibt hierbei identisch zum Batch Modus. Allerdings verändert sich, wie das dekonvolierte Signal zur Steuerung der Ventile verwendet wird. Ein derartiges Konzept ist in Figur 8 dargestellt. Je nach Anwendungsfall werden Detektoren an unterschiedlichen Stellen in die Rohrleitungen 22 der Multisäulen-Chromatographie-Anordnung integriert.

Beispielhaft kann das Verfahren zur Regelung der Beladungsdauer im kontinuierlichen Prozess angewendet werden. Bei der kontinuierlichen Produktion von Biopharmazeutika kann die Produktkonzentration durch Variabilität im Upstream schwanken und mit herkömmlichen, univariaten Detektoren nicht in der Feedleitung detektiert werden. Da die Säulen 26, 28, 30 jedoch eine begrenzte Kapazität aufweisen, die sich zudem durch Säulenalterung ändern kann, ist eine Ermittlung der geladenen Produktmasse zentral. Dies kann mit Hilfe der dekonvolierten, multivariaten Signale aus Detektor 32 und 34 in Figur 8 in Echtzeit erreicht werden.

Angenommen der Feed wird über Detektor 32 auf die Säule 26 gepumpt und anschließend über den Detektor 34 auf die Säule 28 geleitet. Durch die Integration des dekonvolierten multivariaten Signals des Detektors 32 kann fortlaufend die aufgegebene Produktmasse berechnet werden.

Da sich die Kapazität der Säulen durch Alterung verändern kann, erfolgt die Regelung der Säulenverschaltung mit Hilfe des dekonvolierten, multivariaten Signals aus Detektor 34. Dieser befindet sich immer zwischen beladener und auffangender Säule. Ist ein bestimmter Grenzwert der Produktkonzentration am Ausgang von Säule 26 erreicht, wird die Stellung von Ventil 36 und 38 so verändert, dass der Feed auf Säule 28 und über bzw. an Detektor 34 vorbei auf Säule 30 geleitet wird. Der oben beschriebene Prozess wird fortwährend für alle Säulen 26, 28, 30 zyklisch wiederholt.

Ein weiteres Beispiel für eine Anwendung des Verfahrens der vorliegenden Erfindung ist die Regelung der Fraktionierung im kontinuierlichen Prozess.

Bei der Produktelution der Säule 26, 28, 30 im kontinuierlichen Verfahren muss über Ventil 40 die Entscheidung getroffen werden, ob der Effluent fraktioniert, rezykliert oder verworfen wird. Durch Prozessschwankungen kann sich die Auftrennung von Produkt und Kontaminanten im kontinuierlichen Prozess verändern.

Da Produkt und Kontaminanten mit herkömmlichen Methoden nicht selektiv detektiert werden können, kann eine prozessorientierte Regelung von Ventil 40 über univariate Messmethoden komplex sein. Hierdurch können sich im schlechtesten Fall Fehler aufaddieren und der Prozess kann instabil werden. Dies kann sich negativ auf die Produktqualität oder die Ausbeute auswirken. Mit Hilfe des dekonvolierten multivariaten Signals aus Detektor 42 kann dagegen selektiv detektiert werden, zu welchem Zeitpunkt die gewünschte Produktqualität oder Ausbeute als bevorzugter Prozessparameter gegeben ist. Mit Hilfe dieser Information kann Ventil 40 gesteuert werden.

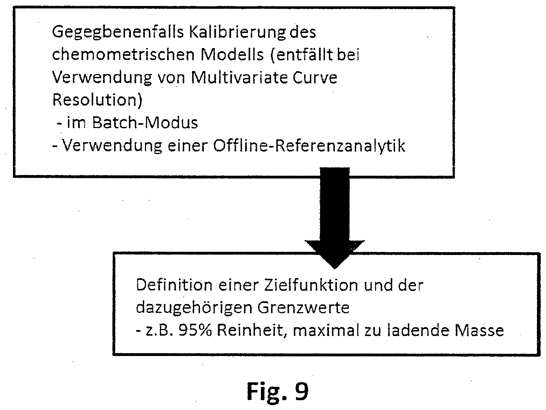

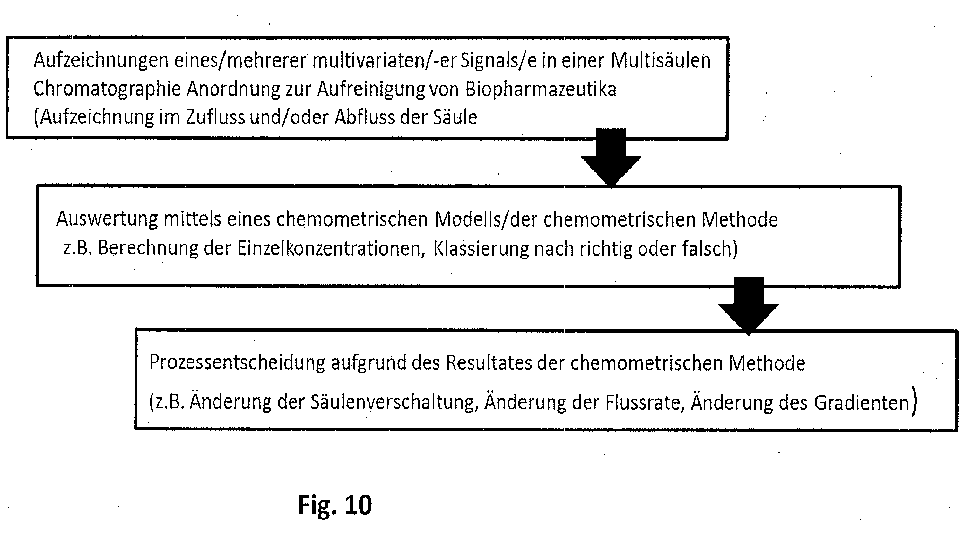

Figuren 9 und 10 zeigen beispielhafte Flussdiagramme für die Vorarbeit und für die Prozesskontrolle für einen beispielhaften spezifischen Fall. Gegebenenfalls wird eine Kalibrierung eines chemometrischen Modells vorgenommen. Dies entfällt bei der Verwendung einer Multivariate Curve Resolution. Die Kalibrierung findet zunächst im Batch-Modus statt und unter der Verwendung einer Offline-Referenzanalytik.

Anhand der Kalibrierung ist es somit möglich eine Zielfunktion zu definieren und die dazugehörigen Grenzwerte, beispielsweise eine bestimmte Reinheit und/oder die maximal zu ladende Masse, festzulegen.

Die somit erhaltenen Daten werden dann für die kontinuierliche Multisäulen-Chromatographie zur Aufreinigung von Biopharmazeutika verwendet (Figur 10). Zumindest ein multivariates Signal in einer Multisäulen-Chromatographie-Anordnung wird aufgezeichnet. Die Aufzeichnung findet mittels Detektoren im Zufluss und/oder Abfluss der Säulen statt.

Das zumindest eine aufgezeichnete multivariate Signal wird dann mittels zumindest eines chemometrischen Modells bzw. einer chemometrischen Methode ausgewertet, beispielsweise in einer Berechnung der Einzelkonzentrationen und/oder Klassierung nach richtig oder falsch.

Aufgrund der Resultate der chemometrischen Methode erfolgt die Prozessentscheidung, beispielsweise eine Änderung der Säulenverschaltung und/oder der Flussrate und/oder des Gradienten.

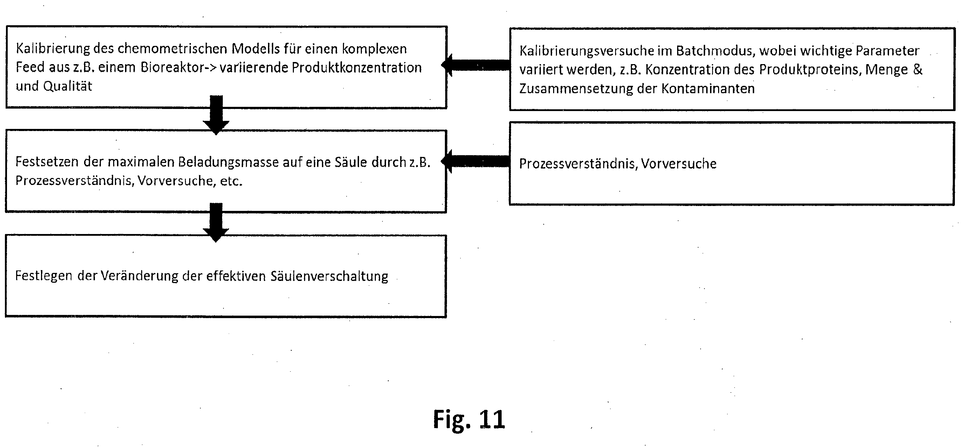

Figuren 11 zeigt ein beispielhaftes Flußdiagramm für die Vorarbeit für einen beispielhaften allgemeinen Fall.

Die Kalibrierung des chemometrischen Modells für einen komplexen Feed aus beispielsweise einem Bioreaktor wird zunächst mittels Kalibrierungsversuche im Batchmodus ermöglicht. Ein Feed aus beispielsweise einem Bioreaktor weist herkömmlicherweise eine variierende Produktkonzentration und Qualität auf. Bei den Kalibrierungsversuchen im Batchmodus werden daher wichtige Parameter variiert, zum Beispiel die Konzentration des Produktproteins, Menge und Zusammensetzung der Kontaminanten. Weiter wird die maximale Beladungsmasse auf eine Säule festgesetzt. Diese Variationen werden anhand von Vorversuchen, Prozessverständnis, etc. festgesetzt. Daraufhin wird die Veränderung der effektiven Säulenverschaltung festgelegt.

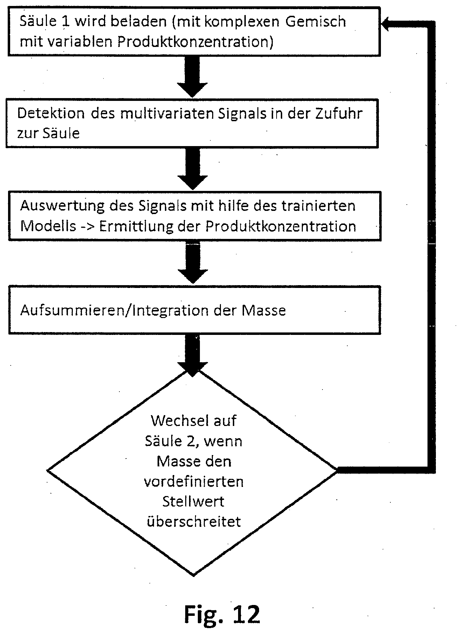

Figur 12 zeigt ein beispielhaftes Flußdiagramm für die Prozesskontrolle für einen beispielhaften allgemeinen Fall.

Die erste Säule einer Multi-Säulen-Chromatographieanordung wird mit einem komplexen Gemisch mit variablen Produktkonzentrationen beladen. Ein multivariates Signal wird in der Zufuhr zur Säule detektiert. Das Signal wird daraufhin mittels des trainierten Modells ausgewertet und somit beispielsweise die Produktkonzentration ermittelt. Als weiterer Schritt folgt das Aufsummieren bzw. die Integration der Massen der einzelnen Komponenten des Gemisches.

Der Begriff Masse bezieht sich hier auf die aktuell geladene Produktmasse auf der ersten Säule. Weiterhin wird in dem konkret beschriebenen Beispiel nur die Produktkonzentration und geladene Produktmasse bestimmt.

Als nächstes folgt der Wechsel auf eine zweite Säule der Multi-Säulen-Chromatographieanordung, wenn die Masse den vordefinierten Stellwert überschreitet. Der Vorgang kann dann im Anschluss für die zweite Säule wiederholt werden.

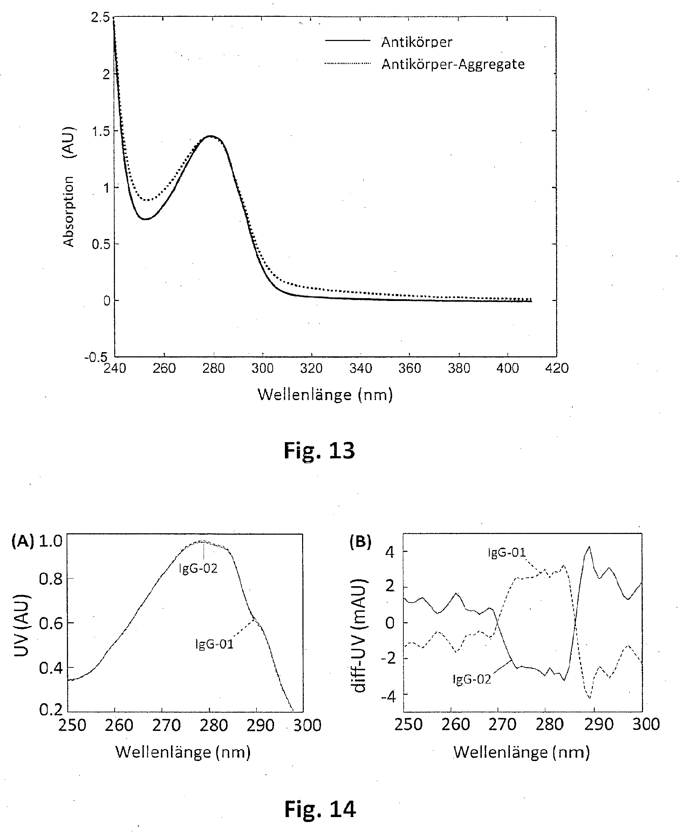

Figur 13 zeigt zwei beispielhafte Absorptionsspektren. Ein Absorptionsspektrum betrifft einen Antikörpern, und ist in Figur 13 als durchgezogene Linie dargestellt. Das in Figur 13 als gepunktete Linie dargestellte Spektrum betrifft ein Antikörper-Aggregat. Es ist deutlich zu sehen, wie gering die Unterschiede zwischen den Spektren sind. Insbesondere wurde vor der Erfindung angenommen, dass aufgrund der geringen Unterschiede zwischen solchen Spektren derartige Spektren nicht zur Regelung einer kontinuierlichen Multi-Säulen-Chromatographie herangezogen werden können. Gemäß der vorliegenden Erfindung wurde jedoch erkannt, dass mittels chemometrischer Verfahren, insbesondere PLS und/oder neuronaler Netze möglich ist, aufgrund der gering jedoch vorhandenen spektralen Unterschiede eine kontinuierlichen Multi-Säulen-Chromatographie derart zu regeln, insbesondere Prozessentescheidungen zu treffen, um einen Aufreinigungsprozess derart zu regeln, dass ein Biopharmazeutikum und/oder Protein und/oder Proteingemisch und/oder ein anderweitiges gesuchtes Produkt mit ausreichender Reinheit zu extrahieren. So kann beispielsweise ein gesuchter Antikörper in Multikomponentengemische selektiv quantifiziert werden bzw. daraus extrahiert, d.h. aufgereinigt werden, obwohl sich die Spektren nur im mAU-Bereich unterscheiden können.

Figur 14a zeigt die UV Spektren zweier Komponenten in einem Komponentengemisch, die als IgG-01 und IgG02 bezeichnet werden. Figur 14b zeigt ein Differenzspektrum der beiden Spektren von Fig. 14a. Mittels des erfindungsgemäßen Verfahrens können die beiden Antikörper IgG-01 und IgG-02 in einem Gemisch selektiv quantifiziert werden und jeweils aus dem Gemisch extrahiert, d.h. jeweils aufgereinigt werden, obwohl, wie in Fig. 14b ersichtlich, die spektralen Unterschiede um etwa drei Grössenordnungen kleiner sind, als die normierten Spektrumintensitäten.

## Patentansprüche

1. Verfahren zum Regeln zumindest einer Multisäulen-Chromatographie-Anordnung zum kontinuierlichen Prozess des Aufreinigens von Biopharmazeutika, aufweisend:
- Einbringen eines ersten Multikomponentengemisches in eine Säule (2; 26, 28, 30) der Multisäulen-Chromatographie-Anordnung,
- Erfassen von mindestens einem multivariaten Signal mittels zumindest eines Detektors (10, 12; 32, 34, 42),
- Berechnen von zumindest einem Prozessparameter basierend auf dem multivariaten Signal mittels zumindest eines Datenverarbeitungsprogramms einer Recheneinheit durch Anwendung eines chemometrischen Verfahrens und
- Regeln des Aufreinigungsprozesses durch Regeln zumindest eines regelbaren Stellelements (4) auf Basis des zumindest einen Prozessparameters.

2. Verfahren nach Anspruch 1, wobei das Verfahren die weiteren Schritte umfasst:
- Vergleichen des zumindest einen Prozessparameters mit zumindest einem Referenzparameter und
- Ermitteln zumindest eines Stellsignals auf Basis des Prozessparameters und wobei der Aufreinigungsprozess durch Regeln des Stellsignals geregelt wird.

3. Verfahren nach Anspruch 1 oder 2, wobei das zumindest eine Datenverarbeitungsprogramm als Prozessparameter die Konzentration zumindest einer Komponente des zumindest einen Multikomponentengemisches berechnet.

4. Verfahren nach einem der Ansprüche 1 bis 3, wobei das zumindest eine Datenverarbeitungsprogramm zumindest einen der folgenden Prozessparameter berechnet:
- pH-Wert,
- Leitfähigkeit,
- Absorption des Effluenten,
- Zielproteingehalt,
- Konzentration an koeluierenden Kontaminaten,
- Produktkonzentration,
- Reinheit,
- Ausbeute,
- Produktionsrate und
- In and out of specification.

5. Verfahren nach einem der vorangehenden Ansprüche, wobei der zumindest eine Detektor (10, 12; 32, 34, 42) ausgelegt ist, zumindest ein multivariates Signal aufzuzeichnen, wobei das multivariate Signal ein oder mehrere der folgenden Signale umfasst:
- UV-Spektroskopiesignal,
- Vis-Spektroskopiesignal,
- Fluoreszensspektroskopiesignal,
- Streulichtsignal,
- IR-Spektroskopiesignal und
- Ramanspektroskopiesignal.

6. Verfahren nach einem der vorangehenden Ansprüche, wobei das Berechnen von zumindest einem Prozessparameter mittels des einen Datenverarbeitungsprogramms mit zumindest einem der folgenden chemometrischen Verfahren durchgeführt wird: Partial Least Squares Regression und/oder Berechnungen mittels eines neuronalen Netzes.

7. Verfahren nach einem der vorangehenden Ansprüche, wobei das Verfahren weiter umfasst:
a) Ermitteln der Produktkonzentration im Multikomponentengemisch an der Zufuhrvorrichtung (8) mittels des Detektors (10, 12; 32, 34, 42), welcher vorzugsweise an einem Ausgang einer Säule (2; 26, 28, 30) angeordnet ist,
b) Berechnen der aktuellen auf eine Säule (2; 26, 28, 30) geladenen Produktmasse mittels der ermittelten Produktkonzentration und einer aktuellen Flussrate,
c) Vergleichen der aktuell geladenen Produktmasse mit einem Stellwert und
d) Regeln zumindest eines regelbaren Stellelements (4) auf Basis der aktuell geladenen Produktmasse zum Regeln des Aufreinigungsprozesses, wobei das zumindest eine regelbare Stellelement (4) bevorzugt ein Ventil oder eine Pumpe ist.

8. Verfahren nach einem der vorangehenden Ansprüche, wobei das Verfahren weiter umfasst:
a) Auswerten eines multivariaten Signals des mindestens einen Detektors (10, 12; 32, 34, 42) mittels der zumindest einen Recheneinheit, wobei der Detektor (10, 12; 32, 34, 42) an einem Ausgang einer Säule (2; 26, 28, 30) angeordnet ist, so dass die Komponentenkonzentration im Multikomponentengemisch an der Abführvorrichtung ermittelt wird,
b) Bestimmen der Saturierung und/oder des Durchbruchspunktes der mindestens einen Säule (2; 26, 28, 30) mittels der ermittelten Komponentenkonzentration und
c) Regeln des mindestens einen Stellelements (4), um die Verschaltung der Säulen (2; 26, 28, 30) einzustellen basierend auf der ermittelten Saturierung und/oder dem Durchbruchspunkt.

9. Verfahren nach einem der vorangehenden Ansprüche, wobei das Verfahren weiter umfasst:
a) Ermitteln der Konzentration einer oder mehrerer, insbesondere aller Einzelkomponenten durch Auswertung des zumindest einen multivariaten Signals zumindest eines Detektors (10, 12; 32, 34, 42) mittels der mindestens einen Recheneinheit, wobei der zumindest eine Detektor (10, 12; 32, 34, 42) zwischen zwei Säulen (2; 26, 28, 30) angeordnet ist,
b) Berechnen eines Massenanteils von mindestens einer Komponente,
c) Vergleichen des ermittelten Massenanteils mit einem Stellwert mittels der Recheneinheit und
d) Regeln des mindestens einen Stellelements (4), um die Verschaltung der Säulen (2; 26, 28, 30) und/oder die Fraktionierung eines Produktes und/oder das Verwerfen von Fraktionen basierend auf dem Stellwert einzustellen.

10. Verfahren nach einem der vorangehenden Ansprüche, wobei das Verfahren weiter das Kontrollieren einer Rezyklierung von unvollständig aufgetrennten Bereichen umfasst.

11. Verfahren nach einem der vorangehenden Ansprüche, wobei das Verfahren weiter umfasst:
- Berechnen neuer optimierter Prozessparameter mittels eines mathematischen Modells anhand des zumindest einen berechneten Prozessparameters; und
- Einstellen des Stellelements (4) auf Basis der berechneten Prozessparameter, um neue optimierte Prozessparameter zu erhalten.

12. Multisäulen-Chromatographie-Anordnung verwendbar für einen kontinuierlichen Prozess des Aufreinigens von Biopharmazeutika, aufweisend:
a) mindestens eine erste Trennsäule (2; 26, 28, 30) und eine zweite Trennsäule (2; 26, 28, 30) mit jeweils mindestens einem Eingang und jeweils mindestens einem Ausgang,
b) mindestens eine erste Zufuhrvorrichtung (8), welche geeignet ist zum Befördern von mindestens einem ersten Multikomponentengemisch, wobei die mindestens erste Zufuhrvorrichtung (8) mit dem mindestens einen Eingang der ersten Trennsäule (2; 26, 28, 30) verbunden ist,
c) mindestens eine erste Abführvorrichtung, welche geeignet ist zum Ableiten eines zweiten Multikomponentengemisches, wobei die mindestens erste Abführvorrichtung mit dem mindestens einen Ausgang der ersten Trennsäule (2; 26, 28, 30) verbunden ist,
d) mindestens eine zweiten Zufuhrvorrichtung (8), welche geeignet ist zum Befördern von einem zweiten Multikomponentengemisch, wobei die mindestens zweite Zufuhrvorrichtung (8) mit dem mindestens einen Eingang einer zweiten Trennsäule (2; 26, 28, 30) verbunden ist,
e) mindestens eine zweite Abführvorrichtung, welche geeignet ist zum Ableiten eines dritten Multikomponentengemisches, wobei die mindestens zweite Abführvorrichtung mit dem mindestens einen Ausgang der zweiten Trennsäule (2; 26, 28, 30) verbunden ist,
f) mindestens einen Detektor (10, 12; 32, 34, 42) zum Detektieren eines multivariaten Signals,
g) mindestens eine Recheneinheit mit mindestens einem Datenverarbeitungsprogramm mit mindestens einem chemometrischen Rechenverfahren,
wobei die mindestens eine erste Abführvorrichtung mit der mindestens zweiten Zufuhrvorrichtung (8) verbunden ist,
wobei mindestens eine der ersten und zweiten Zufuhrvorrichtungen (8) und/oder mindestens eine der ersten und zweiten Abführvorrichtungen mindestens ein steuerbares oder regelbares Stellelement (4) aufweist,
wobei der mindestens eine Detektor (10, 12; 32, 34, 42) nach mindestens einem Ausgang angeordnet ist, und
wobei der mindestens eine Detektor (10, 12; 32, 34, 42) mit der mindestens einen Rechnereinheit gekoppelt ist; wobei die mindestens eine Recheneinheit mit dem mindestens einen steuerbaren bzw. regelbaren Stellelement (4) gekoppelt ist und wobei die mindestens eine Recheneinheit ausgelegt ist,
- den zumindest einen Prozessparameter basierend auf dem multivariaten Signal zu berechnen und
- zumindest ein regelbares Stellelement (4) auf Basis des zumindest einen Prozessparameters zu regeln.

13. Multisäulen-Chromatographie-Anordnung nach Anspruch 12, wobei die Recheneinheit weiter ausgelegt ist,
- zumindest einen Prozessparameter mit zumindest einem Referenzparameter zu vergleichen,
- zumindest ein Stellsignal auf Basis des Prozessparameters zu ermitteln und
- den Aufreinigungsprozess durch Regeln des Stellsignals zu regeln.

14. Multisäulen-Chromatographie-Anordnung nach Anspruch 12 oder 13, wobei das Stellelement (4) ein Ventil oder eine Pumpe ist.

15. Verwendung der Multisäulen-Chromatographie-Anordnung nach einem der Ansprüche 12 bis 14, in einem kontinuierlichen Prozess des Aufreinigens von insbesondere Biopharmazeutika, wobei die Multikomponentengemische komplexe Mischungen, insbesondere von Zellkulturüberständen und/oder Überständen von Fermentationen sind.

## Claims

1. Method for controlling at least one multi-column chromatography arrangement for a continuous process of purification of biopharmaceuticals, comprising:
- introducing a first multi-component mixture into a column (2; 26, 28, 30) of the multi-column chromatography arrangement,
- detecting at least one multivariate signal by means of at least one detector (10, 12; 32, 34, 42),
- calculating at least one process parameter based on the multivariate signal by means of at least one data processing program of a computing unit by applying a chemometric method and
- controlling the purification process by means of controlling at least one controllable control element (4) based on the at least one process parameter.

2. Method according to claim 1, wherein the method comprises the further steps of:
- comparing the at least one process parameter with at least one reference parameter and
- determining at least one control signal on the basis of the process parameter and wherein the purification process is controlled by controlling the control signal.

3. Method according to claim 1 or 2, wherein the at least one data processing program calculates the concentration of at least one component of the at least one multi-component mixture as process parameter.

4. Method according to one of claims 1 to 3, wherein the at least one data processing program calculates at least one of the following process parameters:
- pH value,
- conductivity,
- absorption of the effluent,
- target protein content,
- concentration of coeluting contaminants,
- product concentration,
- purity,
- yield,
- production rate and
- In and out of specification.

5. Method according to one of the previous claims, wherein the at least one detector (10, 12; 32, 34, 42) is designed to record at least one multivariate signal, wherein the multivariate signal comprises one or more of the following signals:
- UV spectroscopy signal,
- vis spectroscopy signal,
- fluorescence spectroscopy signal,
- scattered light signal,
- infrared spectroscopy signal and
- Raman spectroscopy signal.

6. Method according to one of the previous claims, wherein the calculation of at least one process parameter by means of the one data processing program is carried out by means of at least one of the following chemometric methods: Partial Least Squares Regression and/or calculations by means of a neural network.

7. Method according to one of the previous claims, wherein the method further comprises:
a) determining the product concentration in the multi-component mixture at the feed device (8) by means of the detector (10, 12; 32, 34, 42), which is preferably arranged at an output of a column (2; 26, 28, 30),
b) calculating the current product mass loaded onto a column (2; 26, 28, 30) by means of the determined product concentration and a current flow rate,
c) comparing the currently loaded product mass with a control value, and
d) controlling at least one controllable control element (4) based on the currently loaded mass for controlling the purification process, wherein the at least one controllable control element preferably is a valve or a pump.

8. Method according to one of the previous claims, wherein the method further comprises:
a) evaluating a multivariate signal of the at least one detector (10, 12; 32, 34, 42) by means of the at least one computing unit, wherein the detector is preferably arranged at an output of a column (2; 26, 28, 30) so that the component concentration in the multi-component mixture is detected at the discharge device,
b) determining the saturation and/or breakthrough point of the at least one column (2; 26, 28, 30) by means of the detected component concentration and
c) controlling the at least one control element (4) in order to set the interconnection of the columns (2; 26, 28, 30) based on the detected saturation and/or the breakthrough point.

9. Method according to one of the previous claims, wherein the method further comprises:
a) detecting the concentration of one or several, in particular all single components by evaluating the at least one multivariate signal of at least one detector (10, 12; 32, 34, 42) by means of the at least one computing unit, wherein the at least one detector (10, 12; 32, 34, 42) is arranged between two columns (2; 26, 28, 30),
b) calculating a mass percent of at least one component,
c) comparing the determined mass percent with a control value by means of the computing unit and
d) controlling the at least one control element (4) in order to set the interconnection of the columns (2; 26, 28, 30) and/or fractioning of a product and/or rejecting of fractions based on the control value.

10. Method according to one of the previous claims, wherein the method further comprises the controlling of a recycling of incompletely separated areas.

11. Method according to one of the previous claims, wherein the method further comprises:
- calculating new optimized process parameters by means of a mathematical model on the basis of the at least one calculated process parameter; and
- setting the control element (4) on the basis of the calculated process parameters in order to obtain new optimized process parameters.

12. Multi-column chromatography arrangement usable for a continuous process of purification of biopharmaceuticals, comprising:
a) at least one first separation column (2; 26, 28, 30) and one second separation column (2; 26, 28, 30), each with at least one input and each with at least one output,
b) at least one first feed device (8) suitable for transporting at least one first multi-component mixture, wherein the at least one first feed device (8) is connected to the at least one input of the first separation column (2; 26, 28, 30),
c) at least one first discharge device suitable for discharging a second multi-component mixture, wherein the at least first discharge device is connected to the at least one output of the first separation column (2; 26, 28, 30),
d) at least one second feed device (8) suitable for transporting a second multi-component mixture, wherein the at least second feed device (8) is connected to at least one input of a second separation column (2; 26, 28, 30),
e) at least one second discharge device suitable for discharging a third multi-component mixture, wherein the at least second discharge device is connected to the at least one output of the second separation column (2; 26, 28, 30),
f) at least one detector (10, 12; 32, 34, 42) for detecting a multivariate signal, and
g) at least one computing unit with at least one data processing program with at least one chemometric calculation method,
wherein the at least one first discharge device is connected to the at least one second feed device (8);
wherein at least one of the first and second feed devices (8) and/or at least one of the first and second discharge devices have at least one controllable control element (4);
wherein the at least one detector (10, 12; 32, 34, 42) is arranged after at least one output; and
wherein the at least one detector (10, 12; 32, 34, 42) is coupled to the at least one computing unit; wherein the at least one computing unit is coupled to the at least one controllable control element (4) and wherein the at least one computing unit is designed to
- calculate the at least one process parameter based on the multivariate signal and
- control at least one controllable control element (4) based on the at least one process parameter.

13. Multi-column chromatography arrangement according to claim 12, wherein the computing unit is further designed to
- compare at least one process parameter with at least one reference parameter;
- determine at least one control signal based on the process parameter and
- control the purification process by means of controlling the control signal.

14. Multi-column chromatography arrangement according to claim 12 or 13, wherein the control element (4) is a valve or a pump.

15. Use of a multi-column chromatography arrangement according to one of claims 12 to 14, in a continuous process of purification of in particular biopharmaceuticals, wherein the multi-component mixtures are complex mixtures, in particular of cell culture supernatants and/or supernatants of fermentations.

## Revendications

1. Procédé de commande d'au moins un agencement de chromatographie multicolonne servant au processus continu du nettoyage de produits biopharmaceutiques, présentant :
- la mise en place d'un premier mélange multicomposant dans une colonne (2 ; 26, 28, 30) de l'agencement de chromatographie multicolonne,
- l'acquisition d'au moins un signal multivarié au moyen d'au moins un détecteur (10, 12 ; 32, 34, 42),
- le calcul d'au moins un paramètre de processus reposant sur le signal multivarié au moyen d'au moins un programme de traitement de données d'une unité de calcul par l'application d'un procédé chimiométrique et
- la régulation du processus de nettoyage par la commande d'au moins un élément de réglage (4) ajustable sur la base dudit paramètre de processus au moins.

2. Procédé selon la revendication 1, dans lequel le procédé comprend les autres étapes :
- la comparaison dudit paramètre de processus au moins avec au moins un paramètre de référence et
- la détermination d'au moins un signal de réglage sur la base du paramètre de processus et dans lequel le processus de nettoyage est régulé par la commande du signal de réglage.

3. Procédé selon la revendication 1 ou 2, dans lequel ledit programme de traitement de données au moins calcule la concentration d'au moins un composant dudit mélange multicomposant au moins comme paramètre de processus.

4. Procédé selon l'une des revendications 1 à 3, dans lequel ledit programme de traitement de données au moins calcule au moins l'un des paramètres de processus suivants :
- valeur de pH,
- conductivité,
- absorption de l'effluent,
- teneur en protéines visée,
- concentration de contaminants éluants,
- concentration d'un produit,
- pureté,
- rendement,
- cadence de production et
- dans les spécifications et hors spécifications.

5. Procédé selon l'une des revendications précédentes, dans lequel ledit détecteur au moins (10, 12 ; 32, 34, 42) est conçu de manière à enregistrer au moins un signal multivarié, dans lequel le signal multivarié comprend un ou plusieurs des signaux suivants :
- un signal de spectroscopie UV,
- un signal de spectroscopie dans le visible,
- un signal de spectroscopie de fluorescence,
- un signal de lumière diffuse,
- un signal de spectroscopie IR et
- un signal de spectroscopie Raman.

6. Procédé selon l'une des revendications précédentes, dans lequel le calcul d'au moins un paramètre de processus est exécuté au moyen du programme de traitement de données avec au moins l'un des procédés chimiométriques suivants : régression par les moindres carrés partiels (partial least squares régression = PLS) et/ou calculs au moyen d'un réseau neuronal.

7. Procédé selon l'une des revendications précédentes, dans lequel le procédé comprend encore :
a) la détermination de la concentration d'un produit dans le mélange multicomposant sur le dispositif d'alimentation (8) au moyen du détecteur (10, 12 ; 32, 34, 42), lequel est disposé de préférence à une sortie d'une colonne (2 ; 26, 28, 30),
b) le calcul de la masse de produit actuellement chargée sur une colonne (2 ; 26, 28, 30) au moyen de la concentration de produit évaluée et d'un débit actuel,
c) la comparaison de la masse de produit actuellement chargée avec une valeur de réglage et
d) la commande d'au moins un élément de réglage (4) ajustable d'après la masse de produit actuellement chargée pour réguler le processus de nettoyage, dans lequel ledit élément de réglage (4) ajustable au moins est de préférence une vanne ou une pompe.

8. Procédé selon l'une des revendications précédentes, dans lequel le procédé comprend encore :
a) l'évaluation d'un signal multivarié dudit détecteur au moins (10, 12 ; 32, 34, 42) au moyen de ladite unité de calcul au moins, dans lequel le détecteur (10, 12 ; 32, 34, 42) est disposé à une sortie d'une colonne (2 ; 26, 28, 30), si bien que la concentration des composants dans le mélange multicomposant est évaluée sur le dispositif d'évacuation,
b) la détermination de la saturation et/ou du point de claquage de ladite colonne (2 ; 26, 28, 30) au moins au moyen de la concentration de produit évaluée et
c) la commande d'au moins un élément de réglage (4) pour ajuster le couplage des colonnes (2 ; 26, 28, 30) sur la base de la saturation évaluée et/ou du point de claquage.

9. Procédé selon l'une des revendications précédentes, dans lequel le procédé comprend encore :
a) la détermination de la concentration d'un ou de plusieurs, notamment de tous les composants individuels par l'évaluation d'au moins un signal multivarié d'au moins un détecteur (10, 12 ; 32, 34, 42) au moyen de ladite unité de calcul au moins, dans lequel ledit détecteur au moins (10, 12 ; 32, 34, 42) est disposé entre deux colonnes (2 ; 26, 28, 30),
b) le calcul d'une fraction massique d'au moins un composant,
c) la comparaison de la fraction massique évaluée avec une valeur de réglage au moyen de l'unité de calcul et
d) la commande d'au moins un élément de réglage (4) pour ajuster le couplage des colonnes (2 ; 26, 28, 30) et le fractionnement d'un produit et/ou le rejet de fractions d'après la valeur de réglage.

10. Procédé selon l'une des revendications précédentes, dans lequel le procédé comprend encore le contrôle d'un recyclage de zones incomplètement fractionnées.

11. Procédé selon l'une des revendications précédentes, dans lequel le procédé comprend encore :
- le calcul de nouveaux paramètres de processus optimisés au moyen d'un modèle mathématique à l'aide d'au moins un paramètre de processus calculé ; et
- l'ajustage de l'élément de réglage (4) sur la base du paramètre de processus calculé pour obtenir de nouveaux paramètres de processus optimisés.

12. Agencement de chromatographie multicolonne pouvant servir à un processus continu du nettoyage de produits biopharmaceutiques, présentant : :
a) au moins une première colonne de séparation (2 ; 26, 28, 30) et une seconde colonne de séparation (2 ; 26, 28, 30) dotées chacune d'au moins une entrée et chacune d'au moins une sortie,
b) au moins un premier dispositif d'alimentation (8), lequel se prête à l'acheminement d'au moins un premier mélange multicomposant, dans lequel le premier dispositif d'alimentation (8) au moins est relié à ladite entrée au moins de la première colonne de séparation (2 ; 26, 28, 30),
c) au moins un premier dispositif d'évacuation, lequel se prête à la vidange d'un deuxième mélange multicomposant, dans lequel le premier dispositif d'évacuation au moins est relié à ladite sortie au moins de la première colonne de séparation (2 ; 26, 28, 30),
d) au moins un second dispositif d'alimentation (8), lequel se prête à l'acheminement d'au moins un deuxième mélange multicomposant, dans lequel le second dispositif d'alimentation (8) au moins est relié à ladite entrée au moins d'une seconde colonne de séparation (2 ; 26, 28, 30),
e) au moins un second dispositif d'évacuation, lequel se prête à la vidange d'un troisième mélange multicomposant, dans lequel le second dispositif d'évacuation au moins est relié à ladite sortie au moins de la seconde colonne de séparation (2 ; 26, 28, 30),
f) au moins un détecteur (10, 12 ; 32, 34, 42) servant à déceler un signal multivarié,
g) au moins une unité de calcul dotée d'au moins un programme de traitement de données avec au moins un procédé de calcul chimiométrique,
dans lequel ledit premier dispositif d'évacuation au moins est relié au second dispositif d'alimentation (8) au moins,
dans lequel au moins l'un des premier et second dispositifs d'alimentation (8) et/ou l'un des premier et second dispositifs d'évacuation présentent au moins un élément de réglage (4) ajustable ou commandable,
dans lequel ledit détecteur (10, 12 ; 32, 34, 42) au moins est disposé en aval d'une sortie, et
dans lequel ledit détecteur (10, 12 ; 32, 34, 42) au moins est connecté à ladite unité de calcul au moins ; dans lequel ladite unité de calcul au moins est connectée audit élément de réglage (4) ajustable ou commandable et dans lequel ladite unité de calcul au moins est conçue de manière à
- calculer au moins un paramètre de processus reposant sur le signal multivarié et à
- commander au moins un élément de réglage (4) ajustable sur la base dudit paramètre de processus au moins.

13. Agencement de chromatographie multicolonne selon la revendication 12, dans lequel l'unité de calcul est encore conçue de manière à
- comparer au moins un paramètre de processus à un paramètre de référence au moins, à
- déterminer au moins un signal de réglage sur la base du paramètre de processus et à
- réguler le processus de nettoyage par la commande du signal de réglage.

14. Agencement de chromatographie multicolonne selon la revendication 12 ou 13, dans lequel l'élément de réglage (4) est une vanne ou une pompe.

15. Application de l'agencement de chromatographie multicolonne selon l'une des revendications 12 à 14, dans un processus continu du nettoyage notamment de produits biopharmaceutiques, dans lequel les mélanges multicomposant sont des mélanges complexes, en particulier des surnageants de culture cellulaire et/ou des surnageants de fermentations.
